Europäisches Patentamt

**European Patent Office**

Office européen des brevets

(19)

(11) Publication number: **0 173 550**
A2

# (12) EUROPEAN PATENT APPLICATION

(21) Application number: **85305990.5**

(22) Date of filing: **22.08.85**

(51) Int. Cl.⁴: **G 09 B 15/02**

(30) Priority: **22.08.84 GB 8421255**

(43) Date of publication of application: **05.03.86**
Bulletin 86/10

(84) Designated Contracting States: **AT BE CH DE FR IT LI LU NL SE**

(71) Applicant: **Hong, Chan Yam, Blk 96 19-238 Whampea Drive, Singapore 1232 (SG)**
Applicant: **Yah, Chiu Lu, 4-H Lorong Kinchir, Singapore 2056 (SG)**

(72) Inventor: **Hong, Chan Yam, Blk 96 19-238 Whampea Drive, Singapore 1232 (SG)**
Inventor: **Yah, Chiu Lu, 4-H Lorong Kinchir, Singapore 2056 (SG)**

(74) Representative: **Boon, Graham Anthony et al, Elkington and Fife High Holborn House 52/54 High Holborn, London, WC1V 6SH (GB)**

(54) **Music teaching instrument.**

(57) The invention concerns a music teaching instrument which involves the use of a microprocessor to control the centre frequency of a tunable bandpass filter with high Q. As a musical sound passes through this filter, only the component of the signal with this passand frequency is seen at the output. Each incoming signal has a fundamental frequency. The output of the filter with its centre frequency at the fundamental frequency of the incoming signal will have a peak value compared to those at the surrounding frequencies despite the fact that the incoming signal may be very weak in its fundamental frequency. Such a peak can be detected by sweeping the centre frequency of the bandpass filter through a range of frequencies and then reading the value of the amplitude detector connected to the output of the filter. The amplitude detector rectifies the output from the filter and then smoothens out the peaks to give an indication of the maximum amplitudes of the filter output at each frequency. The microprocessor reading the values will be able to tell the frequency at which the filter output is a maximum compared to those at surrounding frequencies.

EP 0 173 550 A2

MUSIC TEACHING INSTRUMENT

The present invention relates to a music teaching instrument.

In the learning of the violin or other string instruments, for example, the problem of pitch is the biggest problem of technique. In order to solve this problem, the inventors researched from the basic principles of art, and analysed the existence of music concept and pitch concept's main problem.

Violin playing could best explain the viewpoint of the concept of technique. The slightest difference made by the most dexterous fingers on the strings will reflect the inadequacy of technique, that is the inability to achieve accuracy in the technique of pitch. However, to make a correct sound on a string does not depend on the skill of the fingers but rather on the cognition of the mind on the technique of pitch. This is the concept of technique and the work and meaning in the process of learning.

From a medical point, the adaptability and training of the hands to a particular action, especially in the high standard required in the playing of the piano and violin, would of course require a long period of time. But the hands are very versatile. In fact they are more versatile than we could ever imagine. Technique should therefore be treated as a mental learning concept and process. This kind of ability differs with every person but it is certainly possible to be trained. It is only through a correct knowledge that one can have a correct understanding and master the instrument. This is the concept of the technique of art and view point. It is thus understood that violinist's talent is not just in his versatile hands but in his pitch concept (or art concept).

The technique of most instruments other than keyboards, require a good knowledge of the accuracy of pitch. Because of the abstractness of pitch, building a pitch concept to a string player is a life-time career.

Another point is that, as in the above, because a learner does not understand the meaning of the concept of art, he practices blindly resulting in a tensed hand. When he can obtain the concept of art and the concept of pitch easily, the hands would naturally be relaxed. This is very important in learning because under a tensed situation, nothing can be achieved. He can then further improve, indirectly affecting the technique of the hands.

A more important point is that amongst all the string instrument players, the knowledge of pitch concept and performance is based on the equal temperament. Only a minority who posess perfect pitch (i.e. $A\# \neq B^b$) can

perform in just intonation. The instrument of the invention allows a learning process - from a beginner to equal temperament to just intonation (60% - 100%) allowing the beginner through such a design to build up and obtain the standard of just intonation.

Thus, the present music teaching instrument is specially designed and invented to guide the performer who plays on instruments which require him to use his aural sense to perform. As shown in the table later, the difference in vibration between sharps and flats is very small. In performing these instruments, this difference is of significant importance. Research indicates that only 25% of all world-class players can perform in just intonation whereas 75% performs in equal temperament. To achieve just intonation may require the performers entire life-time.

According to the present invention there is provided a music teaching instrument comprising means to analyse any particular musical sound including those of just intonation and to determine which note the sound in closest to, means to indicate that note and means to display how close to that note the said sound is.

The present invention or preferred embodiments thereof are able to do the following:

1) Analyse a pitch and determine the fundamental frequency so as to determine the note played and the octave it is in.

2) Search for the fundamental even if it is very weak compared to the other harmonics.

3) To do the above in a relatively short time, reliably, and without any preselection of the musical note.

4) To display the note played on a musical staff.

5) To check if the sound played was within a set tolerance from a musical note and display this using 3 LEDs.

The invention preferably makes use of an adaptive filter, which automatically searches for the note played. The key feature is a tunable filter, which is tuned by a microprocessor-controlled digital-to-analog converter. The instrument, which can include the tunable filter, the microprocessor system, the amplifiers, an amplitude detector and a peak counter, is able to track the fundamentals even if they are very weak.

As indicated above, the music teaching instrument is specially designed and invented for those instruments which require the player to use his aural sense to perform on the instrument, especially for its accuracy of tone and note recognition. It has five special aspects to serve these functions:

1) To analyse tones and indicate it with letter-names;

2) To analyse tones and show its position on the instrument;

3) To analyse tones and indicate its accuracy with the aid of coloured lights;

4)    To cater for the different standards of accuracy.

5)    To show letter-names and the position of the
notes on the instrument simultaneously.

The teaching instrument is specially designed for
the teaching of musical instruments, other than keyboard
instruments, such as;

1)    String Instruments: Violin Viola, Violoncello,
Double-bass;

2)    Wood-wind Instruments: Piccolo, Flute, Clarinet,
Oboe,Cor  Anglais, Bassoon;

3)    Brass Instruments: Trumpet, Cornet, Trombone,
French-horn, Tuba;

and those instruments which require the player's aural
sense to determine the accuracy of tone, through which
the performer will be able to overcome the difficulty
in playing with accuracy of tone.

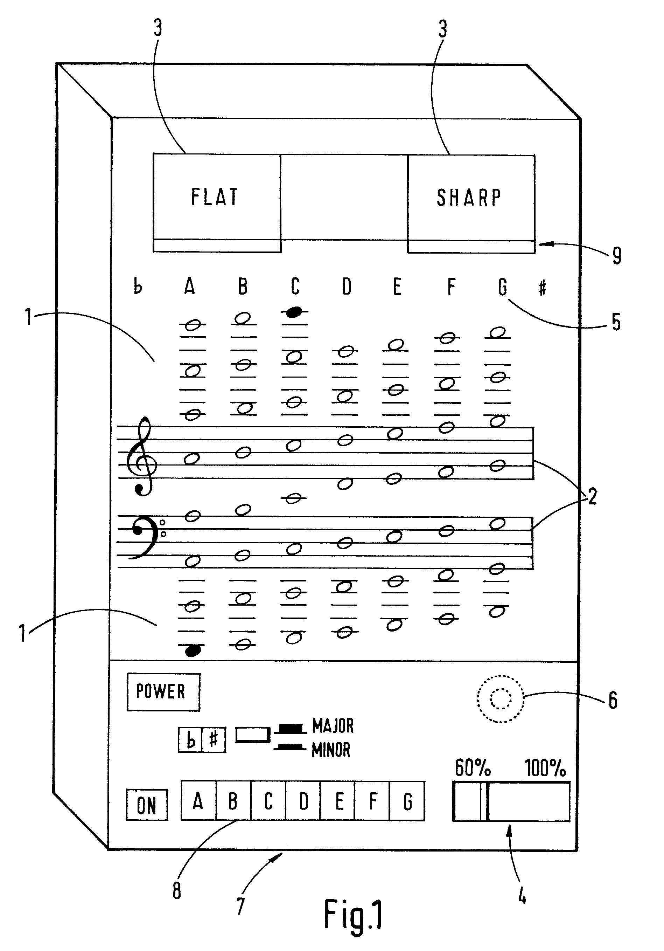

This music teaching instrument is able to capture
the entire range of musical sounds from 27.52 Hz to 4176
Hz, including those of sharp (#) and flat (b) vibrations.
This means that A# is different from Bb as shown in Fig. 1.

When the player is playing any piece of music,
this music teaching instrument will analyse every note
of the music according to the musical performance of the
player. The different letter-names, together with its
position on the instrument, will be shown simultaneously as
the performer plays the music. Three different colored lights are used in the instrument to indicate the accuracy of tone. It indicates tone that is played too high with a bright red light, tone that is played too low with a dark red light, and tone which is accurate with light blue light in the centre.

Preferably, means for adjusting the percentage of the accuracy of tone performed is provided.

A preferred embodiment of the invention is described in detail below, by example only, with reference to the accompanying drawings, in which:

Fig. 1 shows the external appearance of the music teaching instrument;

Fig. 2 is a diagram showing the functional blocks that make up the electronics portion of the instrument;

Fig. 3 shows the tunable bandpass filter schematics;

Fig. 4 shows the schematics of the amplitude detector;

Fig. 5 shows the schematics of the peak counter;

Fig. 6 is a schematic diagram of the digital electronics portion of the instrument; and

Fig. 7 shows a waveform obtained at the output of the amplitude detector when the bandpass filter is swept through the range of frequencies.

Fig. 1 shows the external appearance of the computerised music teaching instrument. The instrument includes an electronics portion (to be discussed in detail later), housed within the casing 7 of the teaching instrument. With the electronics portion the teaching instrument is able to capture the entire range of musical sounds from 27.50Hz to 4171.85Hz, including those of sharp ( # ) and flat (b) vibrations,as shown in the following table:

## TABLE

| | Octave 1 | oct.2 | oct.3 | oct.4 | oct.5 | oct.6 | oct.7 | oct.8 |
|---|---|---|---|---|---|---|---|---|
| A : | 27.50 | 55.00 | 110.00 | 220.00 | 440.00 | 880.00 | 1760.00 | 3520.00 |
| B$^b$ : | 28.97 | 57.94 | 115.89 | 231.77 | 463.54 | 927.08 | 1854.16 | 3708.31 |
| A# : | 29.37 | 58.73 | 117.47 | 234.93 | 469.86 | 939.73 | 1879.45 | 3758.91 |
| B : | 30.94 | 61.88 | 123.75 | 247.50 | 495.00 | 990.00 | 1980.00 | 3960.00 |
| C : | 32.59 | 65.19 | 130.37 | 260.74 | 521.48 | 1042.96 | 2085.93 | 4171.85 |
| D$^b$ : | 34.34 | 68.67 | 137.35 | 274.69 | 549.38 | 1098.76 | 2197.52 | |
| C# : | 34.81 | 69.61 | 139.22 | 278.44 | 556.88 | 1113.75 | 2227.50 | |
| D : | 36.67 | 73.33 | 146.67 | 293.33 | 586.67 | 1173.33 | 2346.67 | |
| E$^b$ : | 38.63 | 77.26 | 154.51 | 309.03 | 618.05 | 1236.10 | 2472.21 | |
| D# : | 39.16 | 78.31 | 156.62 | 313.24 | 626.48 | 1252.97 | 2505.94 | |
| E : | 41.25 | 82.50 | 165.00 | 330.00 | 660.00 | 1320.00 | 2640.00 | |
| F : | 43.46 | 86.92 | 173.83 | 347.65 | 695.31 | 1390.62 | 2781.23 | |
| G$^b$ : | 45.78 | 91.56 | 183.13 | 366.25 | 732.51 | 1465.01 | 2930.02 | |
| F# : | 46.41 | 92.81 | 185.63 | 371.25 | 742.50 | 1485.00 | 2970.00 | |
| G : | 48.89 | 97.78 | 195.56 | 391.11 | 782.22 | 1564.44 | 3128.89 | |
| A$^b$ : | 51.50 | 103.00 | 206.02 | 412.03 | 824.06 | 1648.14 | 3296.28 | |
| G# : | 52.21 | 104.41 | 208.83 | 417.66 | 835.31 | 1670.63 | 3341.25 | |

When a musical sound is played, the sound is captured by a microphone 6. This sound is then analysed by the electronics portion and the result displayed on the staff 2. The accuracy of the tone played is then displayed on the three different coloured lights 3 indicating too low (orange), accurate (green) or too high (red). When the note played is too high or too low, the degree to which the note differs from the accurate value is shown by flickering the LED at different speeds. A fast flicker indicates that the note played is very far off while a slow flicker shows that the note is inaccurate but close to the actual note required. The accuracy of the note played is also displayed using a row of LEDs below the "too low" and "too high" LEDs. When a note is too far off, the whole row of LEDs will light up, causing a line effect. As the note played gets nearer to the "correct" note, the line shortens and disappears when the correct note is hit. The accuracy required is dependent on the proficiency of the learner and can be selected for 0.- 2.4% error of a note using the sliding switch 4.

A player can choose to play different major and minor keys by pressing the buttons 8 on the front panel to select a different set of reference frequencies.

The adjustment for the various percentage of accuracy is to cater for the different standards of learners and performers assisting them in the learning process. For example, when the learner adjusts to 60% for all tones above 60% accuracy, the light blue light will be on. Further adjustment to a higher percentage enable learners and performers to improve their standards. Performers can choose to use 95% i.e. equal temperament or 100% i.e. just intonation to practice.

The letter-names are arranged horizontally with the notes having the same letter-names at different octaves arranged vertically on the staff (for example letter name 'A'). Such an arrangement enables the learner to recognise notes on the staff more efficiently.

The advantage of the arrangement of three different coloured lights is to enable the player to place the instrument relatively far from his score, allowing him to read the score and at the same time correcting his accuracy of tone with the different colour code.

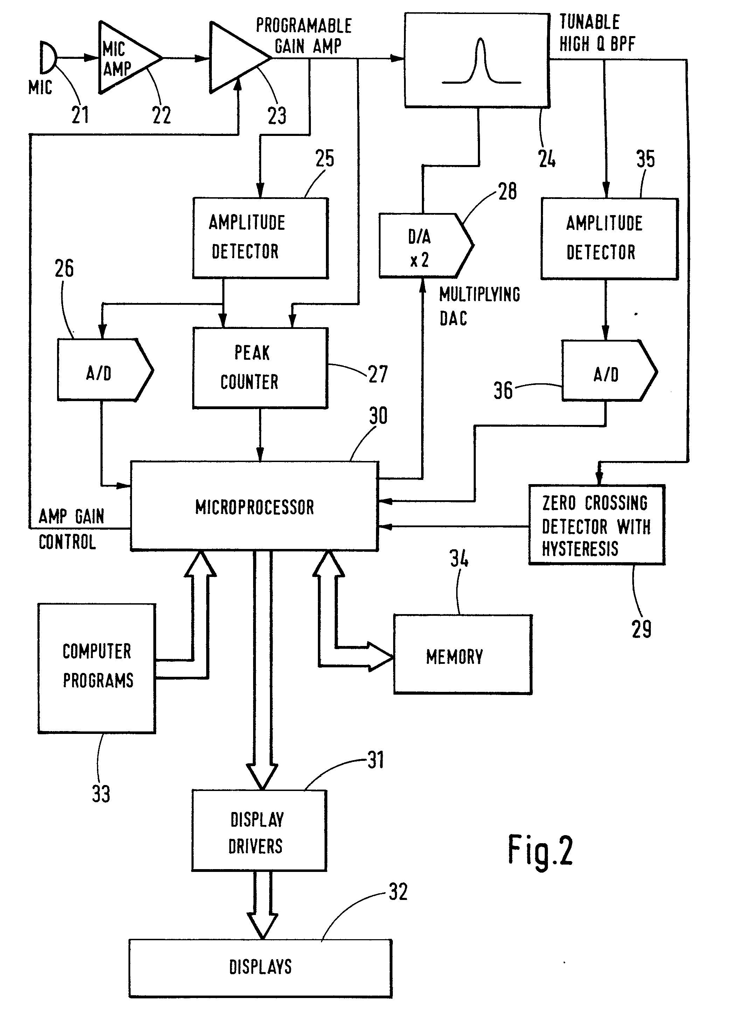

Fig. 2 shows the functional block diagram of the instrument. The musical sound played is captured by the microphone 21 and amplified by the microphone amplifier 22 and the the programmable gain amplifier 23. This signal then passes through an amplitude detector 25, through a analog-to-digital converter 26 to the microprocessor unit 30. The microprocessor 30 will differentiate a note from the surrounding noise and if necessary increase the strength of the signal by increasing the gain of the programmable gain amp 23. The signal from the amplitude detector 25 is then used to set the threshold level of the peak counter 27 which counts the number of peaks. The microprocessor 30 estimates the frequency range from the number of peaks and sweeps and bandpass filter 24 over the estimated range by varying the digital-to-analog values for the range. For each frequency, the microprocessor 30 will read the amplitude from the output of the amplitude detector 35 through an analog-to-digital converter 36 to determine the frequency which gives the peak value. Once the peak value is found, the microprocessor will confirm the exact frequency through the zero crossing detector 29. The microprocessor then searches lower frequencies for peak amplitudes.

Once 2 peaks are found, the microprocessor will estimate the fundamental frequency and scan the fundamental frequency to confirm its estimation. When the fundamental fequency is confirmed, the microprocesor will display the nearest frequency and the accuracy of the note played by driving the displays 32 using the display drivers 31. The microprocessor is able to do all the above by executing the instructions in the stored program 33 which will be discussed later.

It can thus be seen that this embodiment of the invention involves the use of a microprocessor to control the centre frequency of a tunable bandpass filter with high Q. As a musical sound passes through this filter, only the component of the signal with this passband frequency is seen at the output. Each incoming signal has a fundamental frequency. The output of the filter with its centre frequency at the fundamental frequency of the incoming signal will have a peak value compared to those at the surrounding frequencies despite the fact that the incoming signal may be very weak in its fundamental frequency. Such a peak can be detected by sweeping the centre frequency of the bandpass filter through a range of frequencies and then reading the value of the amplitude detector connected to the output of the filter. The amplitude detector rectifies the output from the filter and then smoothens out the peaks to give an indication of the maximum amplitudes of the filter output at each frequency. The microprocessor reading the values will be able to tell the frequency at which the filter output is a maximum compared to those at a surrounding frequencies.

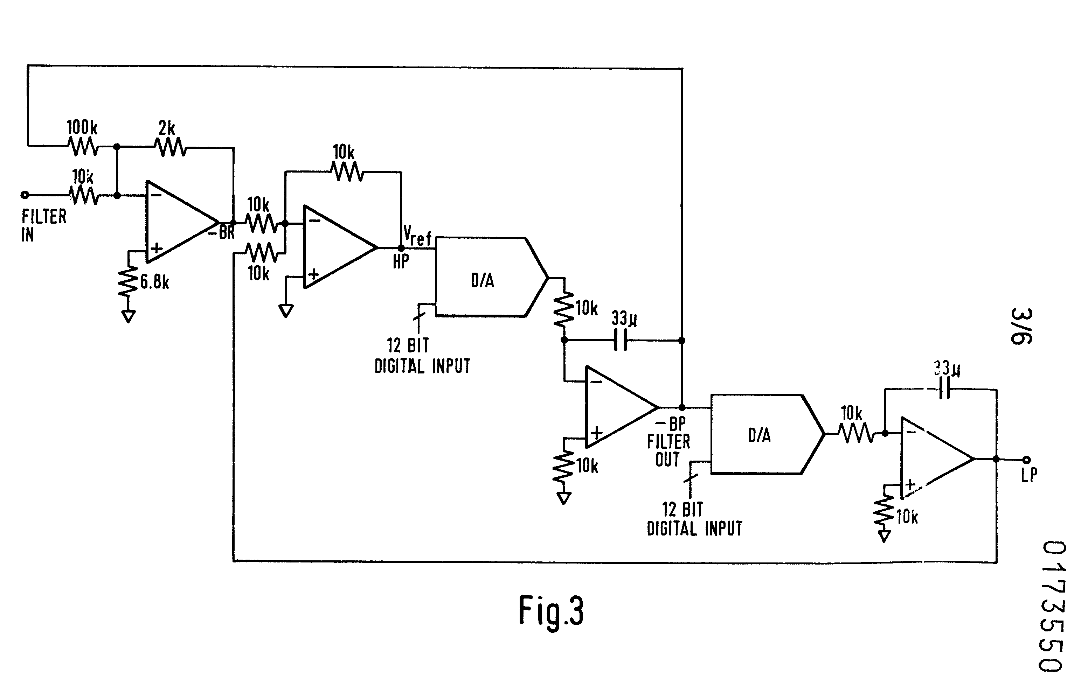

Fig. 3 shows a possible circuit for the tunable high Q bandpass filter 24. The input signal is from the output of the programmable gain amplifier 23. The output of the third stage is a bandpass filter with a high Q. The maximum possible centre frequency of filter is fixed by capacitors C1 and C2 and resistors R1 and R2. The centre frequency can be adjusted by sending different values to the digital inputs of the 12-bit digital-to-analog converter. The centre frequency of the filter varies linearly with the output of the digital-to-analog converter from O Hz to the maximum centre frequency. The resolution of the centre frequency depends on the resolution of the digial-to-analog converter. The bandpass filter rejects signals outside the bandpass region of the filter. The output of the bandpass filter is therefore high if the signal has a component in the centre frequency.

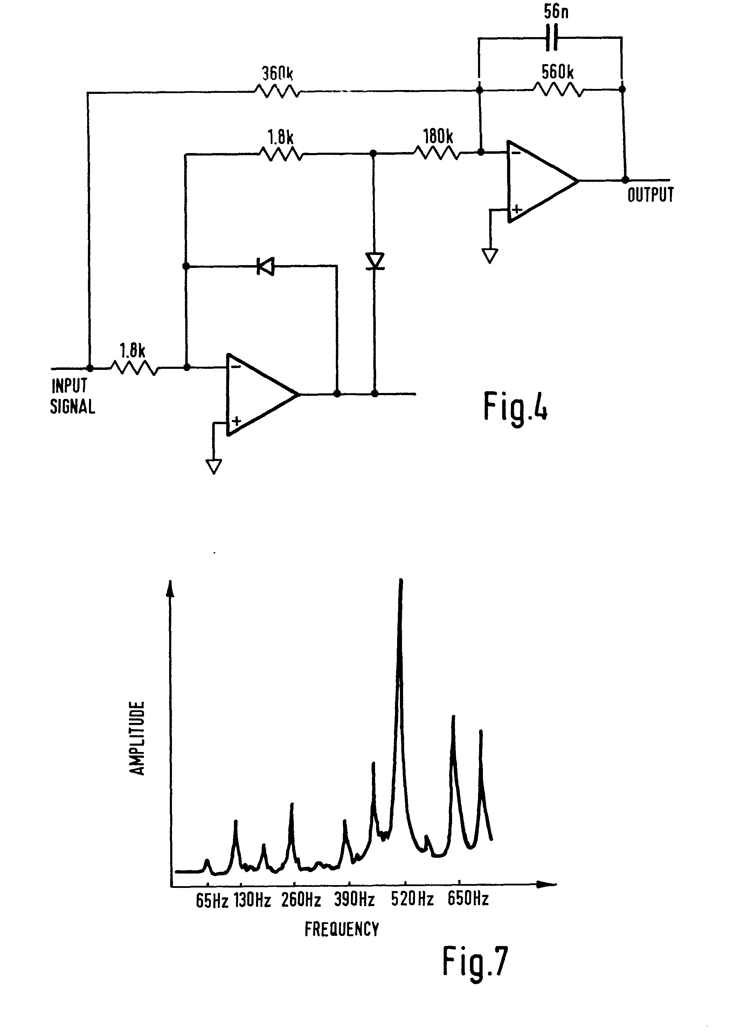

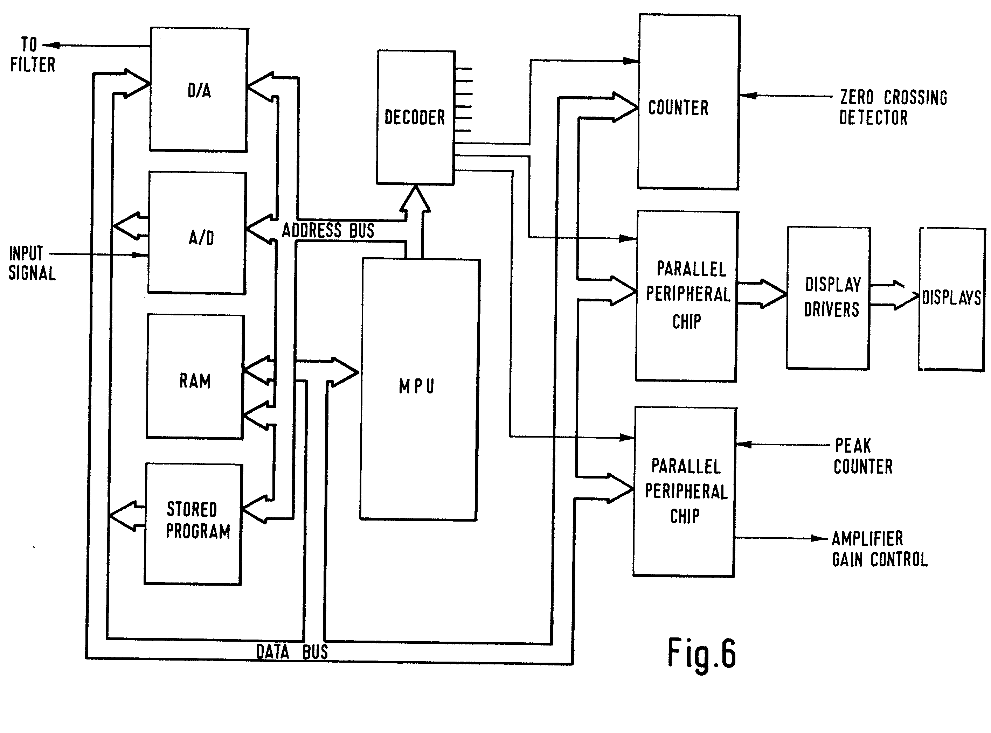

Fig. 4 is an example of an amplitude detector circuit. The circuit rectifies and detects the peaks amplitudes of the incoming signal. The incoming signal is from the output of the gain amplifier. The output is then fed into the peak counter circuit of Fig. 6 to set the threshold values.

0173550

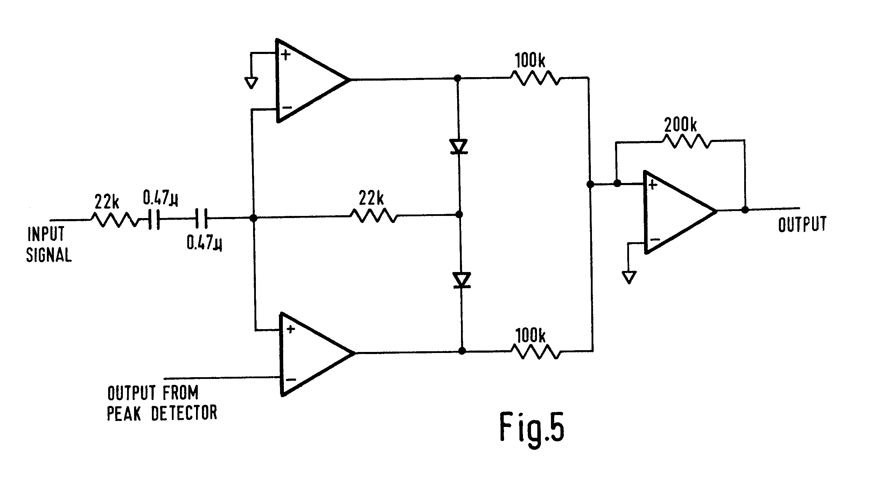

Fig. 5 is a peak counter circuit which counts the number of peaks from the incoming signal. This circuit is designed so that only changes in the signal amplitude above threshold level is counted. Small variations and those due to noise are left out. The output of the peak counter is sampled by the microprocessor.

Fig. 6 shows a possible digital circuit used to process information from the analog circuitry to determine and display the pitch and accuracy of the sound played. The analog-to-digital converter is used to read the signal strength and the digital-to-analog converter is used to set the pass frequency of the bandpass filter. The microprocessor executes instructions from the stored program, determines the fundamental frequency of the note played, and displays the pitch through the parallel peripheral chips used as display drivers.

The functions of the computer program 33 are as follows:

1.    Detect signal strength to differentiate a note from the surrounding noise.

2.    Amplify incoming signals to required signal strength.

3.    Estimate frequency of incoming signals.

4.    Sweep the bandpass filter's centre frequency through a calculated range to detect peak amplitudes.

5.    Detect peak amplitudes.

7.    Determine how accurate the incoming signal is compared to the frequencies in the table of figure 1.

8.    Decide on the tone nearest to the frequencies of the incoming signal and display the note on the musical staff.

9.    Decide on whether the tone is within the required accuracy and display the dark red, light blue or bright red lights accordingly.

These functions are described in more detail below.

1    Amplification of Signal

The computer program constantly monitors the inputs from the microphone by reading the analog-to-digital converter 26. If the input is higher then the expected surrounding noise level, the computer will treat this as a musical sound being played. It will check the strength of the signal and amplify it to the required signal level by controlling the gain of the programmable gain amplifer 23.

2    Estimating the frequency of the incoming signal

The computer program then samples the output of the peak counter to estimate the frequency of the incoming signals with respect to a timer.  When the fundamental is strong, the peak counter output will have a very consistant duty cycle and the frequency will be that of the fundamental. When the fundamental is weak the peak counter output will not have a consistent duty cycle and will be at a higher frequency than the fundamental. Therefore, when the duty cycle is consistent, the computer will treat it as a fundamental frequency and if the duty cycle is inconsistent, the computer program will treat it only as an estimate.

3      Sweeping the Bandpass Filter

With the frequency estimates, the computer will tune the high Q bandpass filter through a range of frequencies to detect the peak amplitudes. The range used depends on the consistency of the duty cycles. By sending different values to the digital-to-analog converters, the centre frequency of the bandpass filter varies from zero to a maximum, which is fixed by hardware.

4      Searching for the peaks

While sweeping through the range of centre frequencies, the computer program monitors the digital values of the analog-to-digital converter to find a peak value. The frequency in the range with a peak amplitude is considered a harmonic or a fundamental. The computer program then sweeps further down in the frequency range to search for other peaks.

5      Estimating the fundamental frequency

The computer program will then estimate the fundamental frequency by calculating the difference in the frequencies where the peaks were found. With this information, the computer program sweeps the frequency range in that region to find a peak value.

6      Confirming the estimate

The computer program will then confirm the estimate by reading the counts from the zero crossing detector.

7     Displaying the pitch

The computer program will then look up the table (on page 8) and display the pitch closest to the sound played.

8     Checking of accuracy

The computer program will then process the information and decide if the sound played is within the accuracy required. If it is within the accuracy required, the computer program displays the light blue light.

If it is not within the accuracy required, the dark red (tone too low) or the bright red (tone too high) lights will be displayed.

As mentioned above, fig. 7 shows a waveform which is obtained at the output of the amplitude detector when the bandpass filter is swept through the range of frequencies. The musical note being played has a weak fundamental frequency of 65 Hz.

0173550

CLAIMS

1. A music teaching instrument comprising means to analyse any particular musical sound including those of just intonation and to determine which note the sound is closest to, means to indicate that note and means to display how close to that note the said sound is.

2. An instrument according to claim 1, wherein the analysing means can determine which octave the said note is in the indicating means can indicate that octave.

3. An instrument according to claim 2, wherein the analysing means can determine the fundamental frequency of the sound, even if weak.

4. An instrument according to claim 3, comprising a tunable bandpass filter.

5. An instrument according to claim 4, wherein the filter has a centre frequency and that frequency can be swept through a range of frequencies to detect the peak fundamental frequency, via an amplitude detector.

6. An instrument according to claim 1, further comprising means to adjust accuracy from 60 - 100%.

7. An instrument according to claim 1, wherein the display means comprise differently coloured lights according to whether the sound is higher or lower than the note.

8. An instrument according to claim 1, comprising means to select a different set of reference frequencies.

0173550

Fig.1

0173550

Fig.2

0173550

Fig.3

0173550

56n

360k

560k

1.8k

180k

OUTPUT

1.8k

INPUT
SIGNAL

Fig.4

AMPLITUDE

65Hz 130Hz 260Hz 390Hz 520Hz 650Hz

FREQUENCY

Fig.7

Fig.5

0173550

Fig.6